# EUROPÄISCHE PATENTSCHRIFT

(11) **EP 3 361 102 B1**
(45) Veröffentlichungstag und Bekanntmachung des Hinweises auf die Patenterteilung: **07.08.2019**
(21) Anmeldenummer: 17155321.7
(22) Anmeldetag: 09.02.2017
(51) Int. Cl.: F04D 19/04, F16C 32/04, F04D 29/058, F04D 27/00, F04D 17/16, F04D 29/048

(54) **POSITIONSERFASSUNGSVORRICHTUNG**
POSITION DETECTION APPARATUS
DISPOSITIF DE DÉTECTION DE POSITION

(43) Veröffentlichungstag der Anmeldung: 15.08.2018
(73) Patentinhaber: PFEIFFER VACUUM GMBH, 35614 Asslar (DE)
(72) Erfinder: Hopf, Dirk, 35641 Schöffengrund-Oberwetz (DE); Wang, Jinou, 35606 Solms-Niederbiel (DE)
(74) Vertreter: Manitz Finsterwald Patent- und Rechtsanwaltspartnerschaft mbB

(56) Entgegenhaltungen:
- EP-A1- 3 064 791
- EP-A2- 0 237 171

## Beschreibung

Die vorliegende Erfindung betrifft eine Vorrichtung zur magnetischen Lagerung eines Rotors mit einer Vorrichtung zur Erfassung der Position des zumindest teilweise magnetgelagerten Rotors und ein Verfahren zur Erfassung der Position eines zumindest teilweise magnetgelagerten Rotors, wobei es sich bei dem Rotor insbesondere um einen zumindest teilweise magnetgelagerten Rotor einer Vakuumpumpe, bevorzugt einer Turbomolekularpumpe handeln kann. Die Erfindung betrifft ferner eine Vakuumpumpe, insbesondere Turbomolekularpumpe, mit einer solchen Positionserfassungsvorrichtung.

Vakuumpumpen wie zum Beispiel Turbomolekularpumpen werden in unterschiedlichen Bereichen der Technik eingesetzt, um ein für einen jeweiligen Prozess notwendiges Vakuum zu schaffen. Turbomolekularpumpen umfassen einen Stator mit mehreren in Richtung einer Rotorachse aufeinanderfolgenden Statorscheiben und einen relativ zu dem Stator um die Rotorachse drehbar gelagerten Rotor, der eine Rotorwelle und mehrere auf der Rotorwelle angeordnete, in axialer Richtung aufeinanderfolgende und zwischen den Statorscheiben angeordnete Rotorscheiben umfasst, wobei die Statorscheiben und die Rotorscheiben jeweils eine pumpaktive Struktur aufweisen.

In der EP 3 064 791 A1 ist bereits ein Magnetlager zum kontaktlosen Halten eines Körpers beschrieben, das gleichzeitig zur Ermittlung einer jeweiligen Positionsabweichung des Körpers von einer Differenzposition ausgeführt ist. Das Magnetlager kann bei einer Vakuumpumpe, insbesondere Turbomolekularpumpe vorgesehen sein. Der berührungslosen, wenigstens zwei Sensorspulen umfassenden Sensorik kann ein Steuermodul zugeordnet sein, über das sie mit einem periodischen Signal beaufschlagbar ist. Aus der unterschiedlichen Stromrichtung des von der ersten Spule kommenden Stroms und des zur zweiten Spule hin fließenden Stroms wird ein Differenzstrom gemessen.

Eine aus der EP 0 237 171 bekannte Vorrichtung zur Erfassung der Position eines Objekts weist eine berührungslose Sensorik mit zwei Sensorspulen auf, von denen jeweils eine als Referenzspule und die andere als Messspule vorgesehen ist. Die betreffende Sensorik kann mit einem periodischen Signal beaufschlagt werden. Es ändert sich lediglich die Induktivität der Messspule in Abhängigkeit von der Lage bzw. Entfernung des Objekts, während die der Referenzspule unverändert bleibt.

Der Erfindung liegt die Aufgabe zugrunde, eine Vorrichtung und ein Verfahren der eingangs genannten Art anzugeben, die eine möglichst genaue schnelle und zuverlässige berührungslose Erfassung der Position eines schnell drehenden, zumindest teilweise magnetgelagerten Rotors wie insbesondere eines zumindest teilweise magnetgelagerten Rotors einer Vakuumpumpe ermöglichen.

Die Aufgabe wird erfindungsgemäß durch eine Vorrichtung mit den Merkmalen des Anspruchs 1, durch ein Verfahren mit den Merkmalen des Anspruchs 13 und durch eine Vakuumpumpe, insbesondere Turbomolekularpumpe, mit den Merkmalen des Anspruchs 12 gelöst. Bevorzugte Ausführungsformen der erfindungsgemäßen Vorrichtung sowie bevorzugte Ausgestaltungen des erfindungsgemäßen Verfahrens ergeben sich aus den Unteransprüchen, der vorliegenden Beschreibung sowie der Zeichnung.

Die erfindungsgemäße Vorrichtung umfasst eine im Bereich eines Magnetlagers des Rotors angeordnete berührungslose Sensorik und eine dieser zugeordnete Steuer- und/oder Auswerteeinheit. Dabei umfasst die Sensorik zur Erfassung einer Rotorbewegung entlang einer jeweiligen Messachse jeweils eine Sensorspuleneinheit mit wenigstens zwei Sensorspulen, die über die Steuer- und/oder Auswerteeinheit jeweils mit einem periodischen elektrischen Erregungssignal beaufschlagbar sind. Des Weiteren sind die Sensorspulen relativ zueinander sowie relativ zum Magnetlager so angeordnet, dass bei einer jeweiligen Rotorbewegung entlang der jeweiligen Messachse in den beiden Sensorspulen entweder eine gegensinnige Induktivitätsänderung auftritt oder sich die Induktivität nur in einer der beiden Sensorspulen ändert und in der anderen Sensorspule zumindest im Wesentlichen unverändert bleibt. Eine jeweilige Sensorspuleneinheit ist zur Bildung einer absoluten Spulenanordnung, bei der sich bei einer jeweiligen axialen Rotorbewegung die Induktivität nur in einer der beiden Sensorspulen ändert und in der als Referenz dienenden anderen Sensorspule unverändert bleibt, mit relativ zueinander konzentrischen Sensorspulen unterschiedlicher Durchmesser ausgeführt.

Als Sensorspulen können insbesondere Luftspulen vorgesehen sein. Die Sensorik ist zur Erfassung einer axialen Rotorbewegung vorgesehen, zusätzlich dazu kann die Sensorik auch zur Erfassung einer radialen Rotorbewegung vorgesehen sein. Dabei kann die Sensorik zur Erfassung der radialen Position des zumindest teilweise magnetgelagerten Rotors insbesondere für die Messung einer Verlagerung des Rotors entlang mehrerer Messachsen wie beispielsweise entlang zweier zueinander senkrechter, in einer zur Rotorachse senkrechten Ebene liegender x-und y-Achsen auch mehrere jeweils einer solchen Messachse zugeordnete Sensorspuleneinheiten mit jeweils wenigstens zwei Sensorspulen umfassen.

Zum Erfassen der axialen Position des Rotors kann die Sensorik insbesondere eine Sensorspuleneinheit mit wenigstens zwei Sensorspulen umfassen, die zur Messung einer Verlagerung des Rotors entlang einer zur Rotorachse parallelen z-Achse vorgesehen sind.

Durch das periodische elektrische Erregungssignal, bei dem es sich beispielsweise um eine periodische Erregungsspannung handeln kann, wird in einer jeweiligen dem Magnetfeld des benachbarten Magnetlagers ausgesetzten Sensorspule ein Strom induziert, dessen Betrag von der Induktivität der Sensorspule abhängig ist. Indem zudem die Induktivität zumindest einer Sensorspule einer jeweiligen Sensorspuleneinheit vom in Richtung der jeweiligen Messachse bemessenen Abstand der Sensorspule zum Magnetlager abhängig ist, ist über den in der Spule induzierten Strom eine jeweilige Verlagerung des Rotors entlang der betreffenden Messachse messbar.

Dabei ist eine jeweilige Sensorspule bevorzugt stationär angeordnet.

Aufgrund der erfindungsgemäßen Ausbildung kann die Position eines schnell drehenden, zumindest teilweise magnetgelagerten Rotors z.B. einer Vakuumpumpe, bevorzugt einer Turbomolekularpumpe, auf genaue, schnelle und zuverlässige Weise berührungslos erfasst werden.

Während bei einer differenziellen Anordnung der beiden Sensorspulen bei einer jeweiligen Rotorbewegung in den beiden Sensorspulen eine gegensinnige Induktivitätsänderung auftritt, dient bei einer absoluten Spulenanordnung, bei der sich die Induktivität nur in einer der beiden Sensorspulen ändert, nur eine Sensorspule als Messspule, während die andere Sensorspule, in der die Induktivität unverändert bleibt, als Referenzspule dient.

Bei der differenziellen Spulenanordnung hängt die Induktivität beider Sensorspulen jeweils vom in Richtung der jeweiligen Messachse bemessenen Abstand zwischen einer jeweiligen Sensorspule und dem benachbarten Magnetlager ab. Dagegen ist bei der absoluten Sensoranordnung nur die Induktivität der als Messspule verwendeten Sensorspule vom in Richtung der jeweiligen Messachse bemessenen Abstand zwischen der Messspule und dem Magnetlager abhängig.

Bevorzugt sind Mittel zur Bildung einer induzierten Sensorspannung aus einem Differenzstrom vorgesehen, der sich aus den in den beiden einer jeweiligen Messachse zugeordneten Sensorspulen induzierten Strömen ergibt. Dabei ist die induzierte Sensorspannung über die Steuer- und/oder Auswerteeinheit zur Erfassung einer jeweiligen Rotorbewegung entlang der betreffenden Sensorachse insbesondere pro Periode des Erregungssignals jeweils zumindest zweimal abtastbar. Für eine jeweilige Abtastung kann die Steuer- und/oder Auswerteeinheit insbesondere einen Analog/Digital-Wandler umfassen.

Die induzierte Sensorspannung ist über die Steuer- und/oder Auswerteeinheit pro Periode des Erregungssignals beispielsweise jeweils zumindest zweimal bei einem jeweiligen Scheitel und/oder einem jeweiligen Nulldurchgang abtastbar.

Gemäß einer bevorzugten Ausführungsform der erfindungsgemäßen Vorrichtung ist über die Steuer- und/oder Auswerteeinheit pro Periode des Erregungssignals zur Bildung einer Differenzspannung die Differenz zwischen zwei - insbesondere bei entgegengesetzten Scheitelwerten der induzierten Sensorspannung erhaltenen - Abtastwerten erzeugbar. Dabei kann anhand der Amplitude der Differenzspannung der Betrag der Rotorbewegung entlang der betreffenden Messachse und/oder anhand des Vorzeichens der Differenzspannung die Richtung der Rotorbewegung entlang der betreffenden Messachse bestimmt werden.

Auf diese Weise kann aus der induzierten Sensorspannung, insbesondere aus deren Betrag und/oder Phase, die erforderliche Information für die jeweilige Rotorbewegung abgeleitet werden.

Das periodische elektrische Erregungssignal kann beispielsweise durch ein zumindest im Wesentlichen sinus- oder kosinusförmiges Signal gebildet sein. Grundsätzlich kann das periodische elektrische Erregungssignal jedoch auch eine von einer Sinus- oder Kosinusform abweichende Form besitzen. Es ist insbesondere lediglich sicherzustellen, dass es nicht nur periodisch ist, sondern sich innerhalb einer jeweiligen Periode auch hinreichend variabel verändert, damit in der dem Magnetfeld des benachbarten Magnetlagers ausgesetzten Sensorspule ein zuverlässig messbarer Strom induziert wird.

Von Vorteil ist insbesondere, wenn die Mittel zur Bildung der induzierten Sensorspannung einen Transformator umfassen, der eingangsseitig mit den wenigstens zwei Sensorspulen einer jeweiligen Sensorspuleneinheit verbundenen und ausgangsseitig mit einer Ausgangsspule versehen ist, an der die induzierte Sensorspannung abgreifbar ist.

Ein solcher Transformator dient nicht nur der Bildung der induzierten Sensorspannung aus den in den beiden Sensorspulen induzierten Strömen, er kann auch zur elektrischen Verstärkung der Sensorsignale genutzt werden.

Gemäß einer weiteren zweckmäßigen Ausführungsform der erfindungsgemäßen Vorrichtung ist zwischen dem Transformator und den wenigstens zwei einer jeweiligen Messachse zugeordneten Sensorspulen ein über die Steuer- und/oder Auswerteeinheit ansteuerbarer, insbesondere analoger Schalter vorgesehen, über den der Transformator während des Erfassungsbetriebs zur Bestimmung des jeweils aktuellen Verstärkungsfaktors des Transformators wiederholt von den beiden Sensorspulen auf eine insbesondere zwei feste Widerstände umfassende Widerstandsanordnung bevorzugt konstanter Impedanz umschaltbar ist.

Dabei ist über die Steuer- und/oder Auswerteeinheit bevorzugt anhand eines Vergleichs des bestimmten jeweiligen aktuellen Verstärkungsfaktors des Transformators mit einem insbesondere gespeicherten Referenzwert die jeweils aktuelle Variation des Verstärkungsfaktors des Transformators feststellbar.

Bevorzugt ist über die Steuer- und/oder Auswerteeinheit anhand der festgestellten jeweils aktuellen Variation des Verstärkungsfaktors des Transformators die während des Erfassungsbetriebs als Ausgangsspannung erzeugte induzierte Sensorspannung korrigierbar, um insbesondere durch die Temperatur des Transformators bedingte Einflüsse auf die induzierte Sensorspannung zu kompensieren. Gleichzeitig können dadurch beispielsweise auch Toleranzen des Systems ausgeglichen werden.

Als feste Widerstände der Widerstandsanordnung können insbesondere Präzisionswiderstände vorgesehen sein.

Die Sensorik, insbesondere eine jeweilige Sensorspuleneinheit, und/oder die Steuer- und/oder Auswerteeinheit sind zweckmäßigerweise auf einer Leiterplatte vorgesehen. Sie können dadurch z.B. als vormontierte Einheit bereitgestellt werden.

Zur berührungslosen Erfassung der Position des zumindest teilweise magnetgelagerten Rotors entlang mehrerer Messachsen kann die Sensorik eine entsprechende Mehrzahl von Sensorspuleneinheiten mit jeweils zumindest zwei Sensorspulen umfassen.

Vorteilhafterweise umfasst eine jeweilige Sensorspuleneinheit zur Bildung einer differenziellen Spulenanordnung, bei der in den beiden Sensorspulen bei einer jeweiligen radialen Rotorbewegung eine gegensinnige Induktivitätsänderung auftritt, zwei auf einander gegenüberliegenden Seiten des benachbarten Magnetlagers angeordnete Sensorspulen.
Es ist beispielsweise auch eine erweiterte absolute Spulenanordnung zur Erfassung der Rotorbewegung entlang mehrerer Messachsen denkbar, bei der die den verschiedenen Messachsen zugeordneten Spuleneinheiten jeweils eine als Messspule dienende Sensorspule aufweisen und für die verschiedenen Spuleneinheiten eine gemeinsame Referenzspule vorgesehen ist.

Die Sensorspulen können insbesondere als Kunststoff-Luftspulen ausgeführt sein. Mit der erfindungsgemäßen Vorrichtung kann die Rotorposition einer schnell drehenden, zumindest teilweise magnetgelagerten Vakuumpumpe auf genaue, schnelle und zuverlässige Weise berührungslos erfasst werden.

Zur Messung der Rotorposition entlang einer jeweiligen Messachse können beispielsweise zwei Luftspulen vorgesehen sein, die entweder als differenzielle Anordnung oder als absolute Anordnung vorgesehen sein können. Bei der differenziellen Anordnung liegen die beiden Sensorspulen einander gegenüber. Sie können insbesondere stationär vorgesehen und zur Messung radialer Abweichungen des Rotors insbesondere parallel zum benachbarten Magnetlager bzw. parallel zur Rotorachse ausgerichtet sein. Eine jeweilige Rotorbewegung verursacht gleichzeitig eine Induktivitätserhöhung in der einen Sensorspule und eine Induktivitätsverringerung in der anderen Sensorspule. Bei einer jeweiligen absoluten Spulenanordnung dient eine Spule, deren Induktivität unverändert bleibt, lediglich als Referenzspule. Die Induktivität der anderen, als Messspule dienenden Sensorspule ist vom in Richtung der jeweiligen Messachse bemessenen Abstand zwischen der Sensorspule und dem benachbarten Magnetlager bzw. dem Rotor abhängig. Auch bei einer solchen absoluten Spulenanordnung können die Sensorspulen insbesondere wieder stationär vorgesehen sein. Zur Messung axialer Abweichungen des Rotors mit einer absoluten Spulenanordnung weisen die beiden Sensorspulen einer jeweiligen Sensorspuleneinheit einen unterschiedlichen Durchmesser auf und sie sind koaxial zum benachbarten Magnetlager bzw. koaxial zur Rotorachse ausgerichtet.

Bei beiden Varianten ergibt sich aus den in den beiden Sensorspulen einer jeweiligen Sensorspuleneinheit induzierten Strömen ein Differenzstrom, dessen Amplitude und Phase von der Position des Rotors abhängig sind. Der Differenzstrom kann über einen Transformator in eine induzierte Sensorspannung umgewandelt werden, die z.B. zumindest zweimal pro Periode beispielsweise bei einem Scheitel oder einem Nulldurchgang z.B. durch einen Analog/Digital-Wandler abgetastet werden kann. Durch eine entsprechende Software bzw. Programmierung der Steuer- und/oder Auswerteeinheit kann aus den beiden Spannungen eine Differenzspannung gebildet werden, die eine direkte Abbildung der physikalischen Position des Rotors darstellt.

Um Toleranzen und Temperaturdrifts des Systems auszugleichen, kann über einen insbesondere analogen Schalter wiederholt ein separater Zweig aus Präzisionswiderständen anstelle der Sensorspulen auf die Verstärkerschaltung bzw. den Transformator geschaltet werden, um kurzzeitig einen Verstärker-Korrekturwert zu ermitteln. Die Messwertauswertung kann zyklisch erfolgen, wobei durch den oszillierenden Analogschalter abwechselnd ein Messwert zur Korrektur und ein realer Positionswert des Rotors ermittelt werden kann. Durch eine entsprechende Wahl der Messabfolge und der Sensor-Erregungsspannung wird ein optimales und schnelles Zusammenspiel von Korrektur- und Messwerterfassung ermöglicht. Dabei kann das Erregersignal in einem Messzyklus sowohl in der Phase als auch in der Amplitude mehrfach systematisch variiert werden, um eine höchstmögliche Messsicherheit zu erlangen.

Zur Erfassung der radialen Bewegung des Rotors können beispielsweise zwei differenzielle Sensorspuleneinheiten vorgesehen sein, über die eine jeweilige Rotorbewegung entlang zweier zueinander senkrechter Messachsen in einer zur Rotorachse senkrechten Ebene gemessen werden können. Bei den differenziellen Sensorspuleneinheiten ist die Induktivität der Sensorspulen jeweils von der Rotorposition entlang der Messachse abhängig. Zur Erfassung der axialen Bewegung des Rotors ist eine absolute Sensorspuleneinheit vorgesehen, über die eine jeweilige Rotorbewegung entlang einer zur Rotorachse parallelen Achse gemessen werden kann. In diesem Fall ist lediglich die Induktivität der Messspule von der Rotorposition entlang der Messachse abhängig, während die Induktivität der Referenzspule unabhängig von der Position des Rotors gleich bleibt. Dabei kann beispielsweise eine Sensorspuleneinheit vorgesehen sein, deren Sensorspulen als konzentrische Leiterplattenspulen ausgeführt sind. In beiden Fällen können die Sensorspulen insbesondere als Luftspulen, beispielsweise als Kunststoff-Luftspulen, ausgeführt sein.

Im Gegensatz zu einer herkömmlichen elektrischen Verstärkung des Rohmesssignals kann erfindungsgemäß über einen Transformator eine elektromagnetische Verstärkung erfolgen, wodurch nicht nur eine hohe Verstärkung, sondern auch ein sehr niedriges Rauschniveau erzielt wird. Eine Beeinflussung des Verstärkungsfaktors durch die Temperatur des magnetischen Kerns des Transformators kann über die mittels des insbesondere analogen Schalters zuschaltbare Widerstandsanordnung kompensiert werden. Dazu kann der Schalter anhand eines Steuersignals der Steuer- und/oder Auswerteeinheit während des Messbetriebs zwischen den einer jeweiligen Messachse zugeordneten beiden Spulen variierender Impedanz und der beispielsweise zwei feste Widerstände umfassenden Widerstandsanordnung konstanter Impedanz umgeschaltet werden.

Beim Einschalten des Messsystems kann die Ausgangsspannung bei konstanter Impedanz als Referenz gespeichert werden. Während des Messbetriebs kann regelmäßig auf die konstante Impedanz umgeschaltet werden. Aus der aktuellen Ausgangsspannung bei konstanter Impedanz und der gespeicherten Referenz kann die aktuelle Variation des Verstärkungsfaktors festgestellt werden. Dadurch kann die Ausgangsspannung aus dem Sensorbetrieb so korrigiert werden, dass das Messergebnis unabhängig von der Temperatur des Transformators ist.

Die erfindungsgemäße Vakuumpumpe, insbesondere Turbomolekularpumpe, umfasst einen Stator, einen relativ zum Rotor um die Rotationsachse drehbar gelagerten Rotor sowie eine erfindungsgemäße Rotorpositionserfassungsvorrichtung. Die Lagerung des Rotors kann entweder an einem Bereich oder an mehreren Bereichen durch ein Magnetlager erfolgen. Insbesondere kann eine sogenannte Hybridlagerung erfolgen, bei eine Lagerstelle von einem Magnetlager und eine weitere Lagerstelle von einem Wälzlager gebildet wird. Es kann aber auch eine reine Magnetlagerung des Rotors erfolgen.

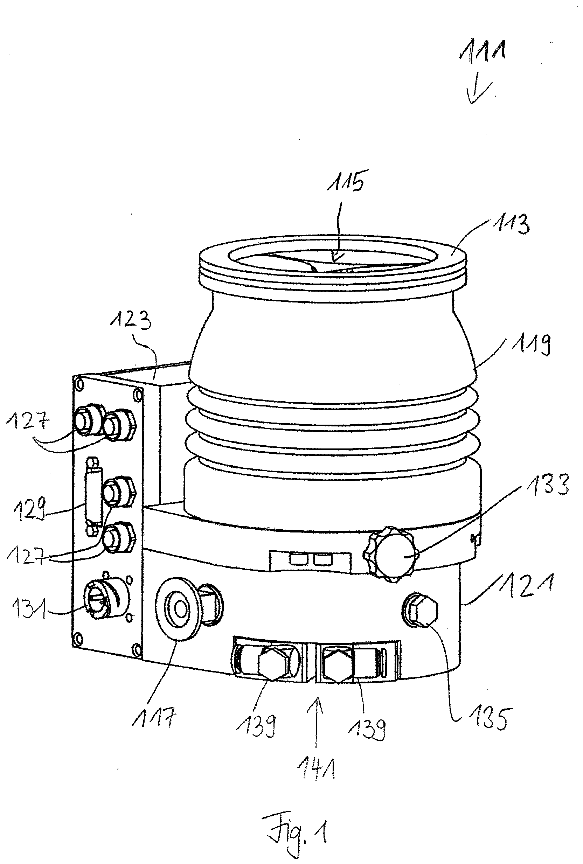

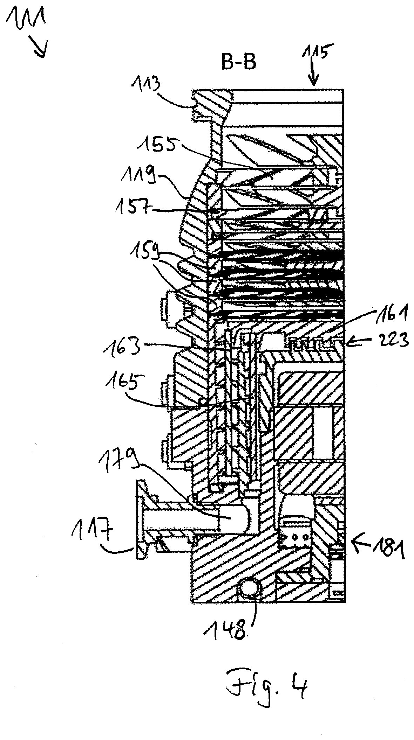

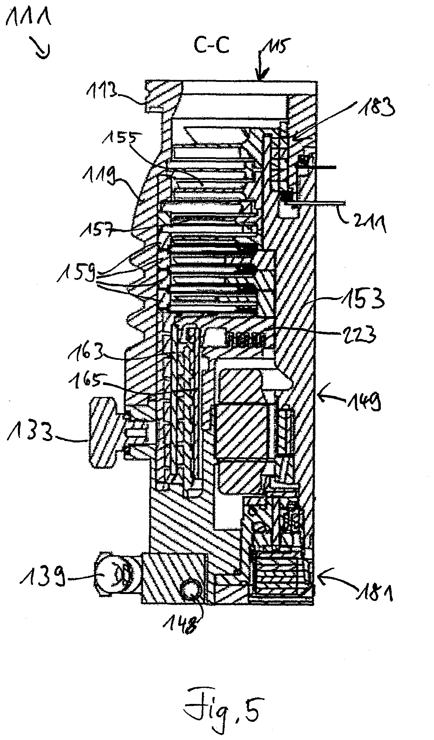

Insbesondere kann der Rotor so gelagert sein, wie es an anderer Stelle für die Turbomolekularvakuumpumpe gemäß den Fig. 1 bis 5 beschrieben ist.

Das erfindungsgemäße Verfahren zum Erfassen der Position eines zumindest teilweise magnetgelagerten Rotors, insbesondere eines zumindest teilweise magnetgelagerten Rotors einer Vakuumpumpe, bevorzugt einer Turbomolekularvakuumpumpe, zeichnet sich dadurch aus, dass zur Erfassung einer Rotorbewegung entlang einer jeweiligen Messachse wenigstens zwei Sensorspulen einer jeweiligen Sensorspuleneinheit einer im Bereich eines Magnetlagers des Rotors angeordneten berührungslosen Sensorik jeweils mit einem periodischen elektrischen Erregungssignal beaufschlagt und relativ zueinander sowie relativ zum Magnetlager so angeordnet werden, dass bei einer jeweiligen Rotorbewegung entlang der jeweiligen Messachse in den beiden Sensorspulen entweder eine gegensinnige Induktivitätsänderung auftritt oder sich die Induktivität nur in einer der beiden Sensorspulen ändert und in der anderen Sensorspule zumindest im Wesentlichen unverändert bleibt, und dadurch, dass eine jeweilige Sensorspuleneinheit zur Bildung einer absoluten Spulenanordnung, bei der es sich bei einer jeweiligen axialen Rotorbewegung die Induktivität nur in einer der beiden Sensorspulen ändert und in der als Referenz dienenden anderen Sensorspule unverändert bleibt, mit relativ zueinander konzentrischen Sensorspulen unterschiedlicher Durchmesser ausgeführt wird.

Bevorzugt wird aus einem Differenzstrom, der sich aus den in den beiden einer jeweiligen Messachse zugeordneten Sensorspulen induzierten Strömen ergibt, eine induzierte Sensorspannung gebildet. Die induzierte Sensorspannung wird zur Erfassung einer jeweiligen Rotorbewegung entlang der betreffenden Sensorachse insbesondere pro Periode des Erregungssignals jeweils zumindest zweimal abgetastet.

Gemäß einer zweckmäßigen praktischen Ausgestaltung des erfindungsgemäßen Verfahrens wird pro Periode des Erregungssignals zur Bildung einer Differenzspannung die Differenz zwischen zwei insbesondere bei entgegengesetzten Scheitelwerten der induzierten Sensorspannung erhaltenen Abtastwerten erzeugt und anhand der Amplitude der Differenzspannung der Betrag der Rotorbewegung entlang der betreffenden Messachse und/oder anhand des Vorzeichens der Differenzspannung die Richtung der Rotorbewegung entlang der betreffenden Messachse bestimmt.

Die Erfindung wird im Folgenden anhand von Ausführungsbeispielen unter Bezugnahme auf die Zeichnung näher erläutert; in dieser zeigen:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine schematische Darstellung einer eine differenzielle Spulenanordnung aufweisenden beispielhaften Sensorspuleneinheit einer Positionserfassungsvorrichtung,
- Fig. 7: eine schematische Darstellung einer beispielhaften Ausführungsform einer Positionserfassungsvorrichtung mit zwei jeweils eine differenzielle Spulenanordnung aufweisenden Sensorspuleneinheiten zur berührungslosen Erfassung der radialen Rotorbewegung,
- Fig. 8: eine schematische Darstellung einer eine absolute Spulenanordnung aufweisenden beispielhaften Sensorspuleneinheit einer Positionserfassungsvorrichtung,
- Fig. 9: eine schematische Darstellung einer beispielhaften Ausführungsform einer erfindungsgemäßen Positionserfassungsvorrichtung mit einer eine absolute Spulenanordnung aufweisenden Sensorspuleneinheit zur berührungslosen Erfassung der axialen Rotorbewegung, wobei die Sensorspulen als konzentrische Leiterplattenspulen ausgeführt sind,
- Fig. 10: eine schematische Darstellung einer beispielhaften erweiterten absoluten Spulenanordnung zur Erfassung der Rotorbewegung entlang mehrerer Messachsen, wobei die den verschiedenen Messachsen zugeordneten Spuleneinheiten jeweils eine als Messspule dienende Sensorspule aufweisen und für die verschiedenen Spuleneinheiten eine gemeinsame Referenzspule vorgesehen ist,
- Fig. 11: beispielhafte Signalformen des elektrischen Erregungssignals, der in den Sensorspulen induzierten Ströme, des Differenzstroms und der induzierten Sensorspannung bei einer positiven Abweichung der Rotorposition aus dem geometrischen Zentrum,
- Fig. 12: beispielhafte Signalformen des elektrischen Erregungssignals, der in den Sensorspulen induzierten Ströme, des Differenzstroms und der induzierten Sensorspannung bei einer negativen Abweichung der Rotorposition aus dem geometrischen Zentrum,
- Fig. 13: eine schematische Darstellung einer beispielhaften Temperaturkompensations-Schaltung einer Positionserfassungsvorrichtung, und
- Fig. 14: eine schematische Darstellung eines beispielhaften, mehrere Kompensationszyklen und Erfassungszyklen umfassenden vollständigen Messzyklus einer Positionserfassungsvorrichtung.

Die in Fig. 1 gezeigte Turbomolekularpumpe 111, bei der die Erfindung vorgesehen sein kann, umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden.

Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

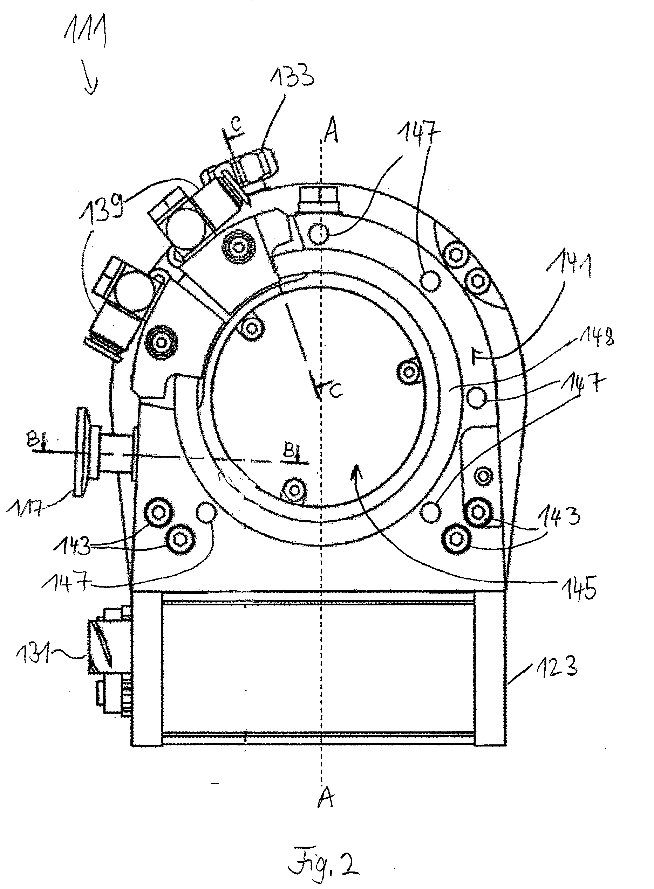

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

In den Figuren 2 bis 5 ist eine Kühlmittelleitung 148 dargestellt, in welcher das über die Kühlmittelanschlüsse 139 ein- und ausgeleitete Kühlmittel zirkulieren kann.

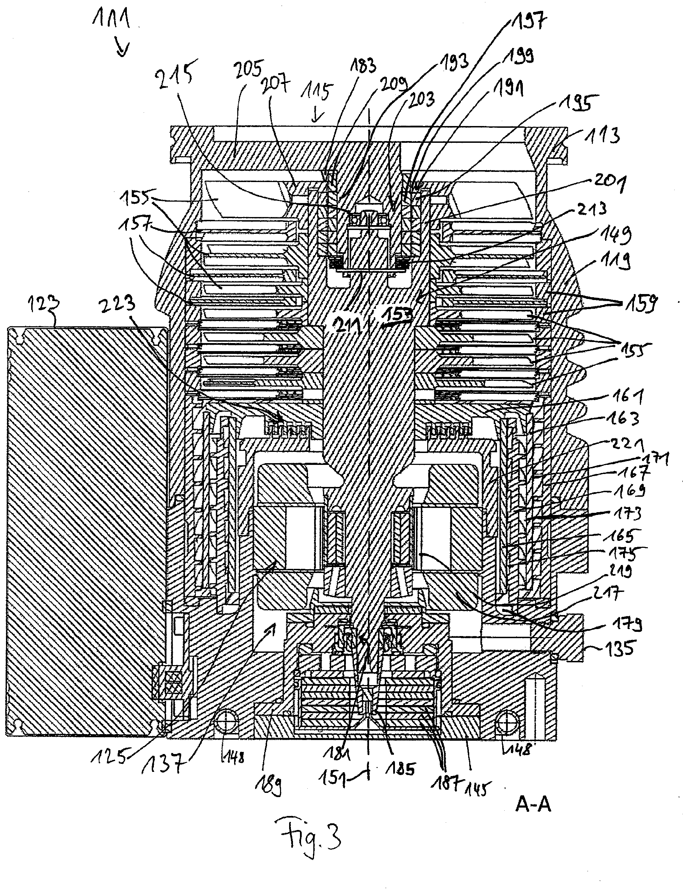

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 92 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sogenannte und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

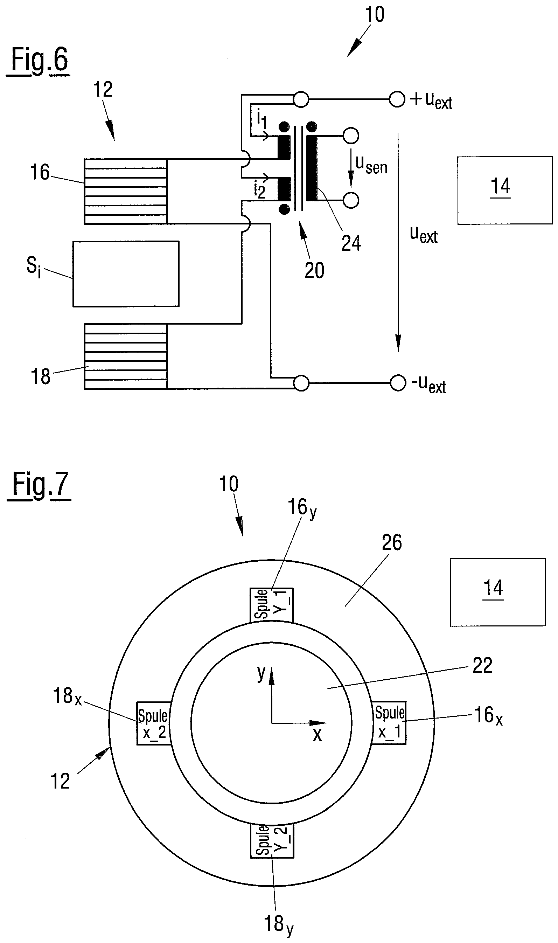

Die Fig. 6 bis 14 zeigen unterschiedliche beispielhafte Ausführungsformen einer Vorrichtung 10 zur Erfassung der Position eines zumindest teilweise magnetgelagerten Rotors 22, insbesondere eines zumindest teilweise magnetgelagerten Rotors einer Vakuumpumpe. Dabei kann eine solche Positionserfassungsvorrichtung 10 beispielsweise zur Erfassung der Position eines Rotors einer Vakuumpumpe eingesetzt werden, wie sie im Zusammenhang mit den Fig. 1 bis 5 beschrieben wurde.

Eine Positionserfassungsvorrichtung 10 umfasst eine im Bereich eines Magnetlagers des Rotors, beispielsweise im Bereich des Permanentmagnetlagers 183 der Vakuumpumpe gemäß den Fig. 1 bis 5, angeordnete berührungslose Sensorik 12 und eine dieser zugeordnete Steuer- und/oder Auswerteeinheit 14. Bei einem Einsatz der Positionserfassungsvorrichtung 10 in einer in den Fig. 1 bis 5 dargestellten Vakuumpumpe kann die Steuer- und/oder Auswerteeinheit 14 der Positionserfassungsvorrichtung 10 in die Steuereinheit der Vakuumpumpe integriert oder auch getrennt von dieser vorgesehen sein.

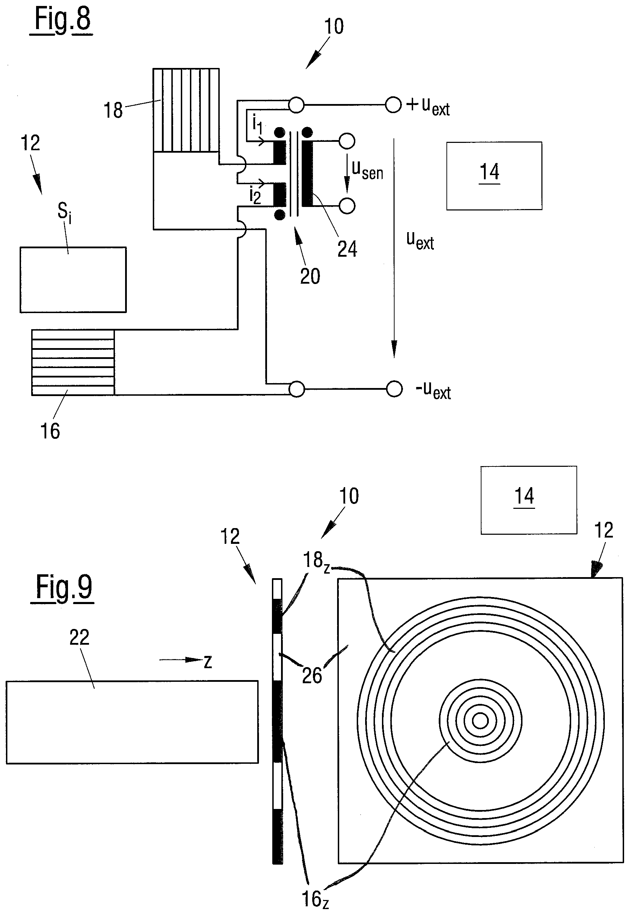

Die Sensorik 12 umfasst zur Erfassung einer Rotorbewegung entlang einer jeweiligen Messachse Sᵢ jeweils eine Sensorspuleneinheit aus zwei insbesondere als Luftspulen ausgeführten Sensorspulen 16, 18, die über die Steuer- und/oder Auswerteeinheit 14 jeweils mit einem periodischen elektrischen Erregungssignal Uₑₓₜ beaufschlagbar und relativ zueinander sowie relativ zum benachbarten Magnetlager 183 so angeordnet sind, dass bei einer jeweiligen Rotorbewegung entlang der jeweiligen Messachse Sᵢ in den beiden Sensorspulen 16, 18 entweder eine gegensinnige Induktivitätsänderung auftritt oder sich die Induktivität nur in einer der beiden Sensorspulen 16, 18 ändert und in der anderen Sensorspule zumindest im Wesentlichen unverändert bleibt (vgl. die Fig. 8 bis 10).

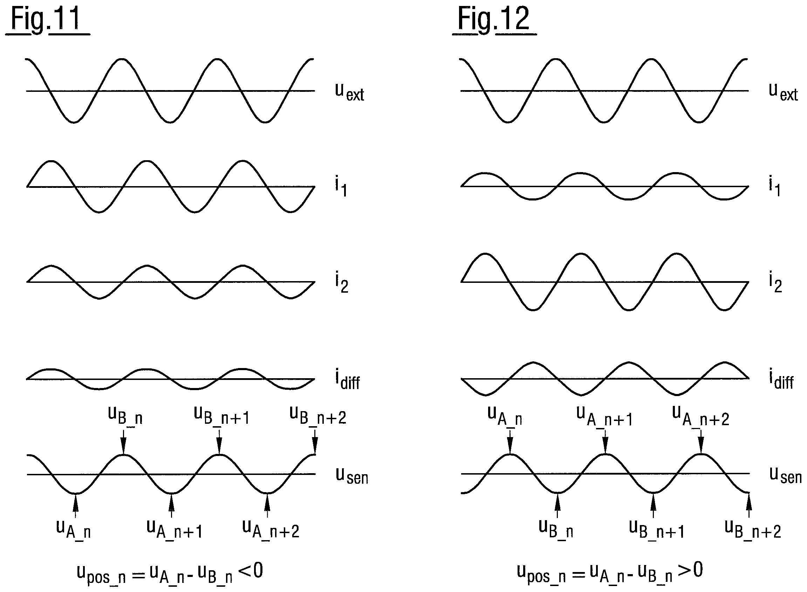

Die Positionserfassungsvorrichtung 10 umfasst jeweils Mittel 20 zur Bildung einer induzierten Sensorspannung Uₛₑₙ aus einem Differenzstrom i_{diff}, der sich aus den in den beiden einer jeweiligen Messachse Sᵢ zugeordneten Sensorspulen 16, 18 induzierten Strömen i₁, i₂ ergibt (vgl. insbesondere die Fig. 6, 8, 10 und 13). Die so gebildete induzierte Sensorspannung Uₛₑₙ kann anschließend über die Steuer- und/oder Auswerteeinheit 14 zur Erfassung einer jeweiligen Rotorbewegung entlang der betreffenden Sensorachse Sᵢ pro Periode des Erregungssignals Uₑₓₜ jeweils zumindest zweimal abgetastet werden (vgl. die Fig. 11 und 12).

Dabei kann die induzierte Sensorspannung Uₛₑₙ über die Steuer- und/oder Auswerteeinheit 14 pro Periode des Erregungssignals Uₑₓₜ jeweils zumindest zweimal insbesondere bei einem jeweiligen Scheitel und/oder einem jeweiligen Nulldurchgang abgetastet werden (vgl. insbesondere die Fig. 11, 12 und 14).

Die Steuer- und/oder Auswerteeinheit 14 kann jeweils so ausgeführt sein, dass pro Periode des Erregungssignals Uₑₓₜ zur Bildung einer Differenzspannung die Differenz zwischen zwei beispielsweise bei entgegengesetzten Scheitelwerten der induzierten Sensorspannung Uₛₑₙ erhaltenen Abtastwerten erzeugbar und anhand der Amplitude der Differenzspannung der Betrag der Rotorbewegung entlang der betreffenden Messachse Sᵢ und/oder anhand des Vorzeichens der Differenzspannung die Richtung der Rotorbewegung entlang der betreffenden Messachse Sᵢ bestimmbar ist (vgl. insbesondere die Fig. 11 und 12).

Wie aus den Fig. 11 und 12 ersichtlich, kann das periodische elektrische Erregungssignal Uₑₓₜ beispielsweise durch ein zumindest im Wesentlichen sinus- oder kosinusförmiges Signal, beispielsweise eine entsprechende Erregungsspannung, gebildet sein. Grundsätzlich kann das periodische elektrische Erregungssignal Uₑₓₜ jedoch auch eine von einer Sinus- oder Kosinusform abweichende Form besitzen. Anstatt bei einem jeweiligen Scheitel kann die Abtastung beispielsweise auch bei einem jeweiligen Nulldurchgang des periodischen elektrischen Erregungssignals Uₑₓₜ erfolgen.

Wie insbesondere aus den Fig. 6 bis 8, 10 und 12 ersichtlich, können die Mittel zur Bildung der induzierten Sensorspannung Uₛₑₙ aus dem Differenzstrom i_{diff}, der sich aus den induzierten Strömen i₁, i₂ ergibt, einen eingangsseitig mit den beiden Sensorspulen 16, 18 verbundenen und ausgangsseitig eine Ausgangsspule 24 aufweisenden Transformator 20 umfassen. Dabei sind die beiden Sensorspulen 16, 18 so an den Transformator 20 angeschlossen, dass sich eingangsseitig ein Differenzstrom i_{diff} (vgl. auch die beiden Fig. 11 und 12) aus den induzierten Strömen i₁, i₂ ergibt. Zudem dient der Transformator 20 sowohl einer elektrischen Verstärkung als auch der Umwandlung des Differenzstroms i_{diff} in die induzierte Sensorspannung Uₛₑₙ.

Die Sensorik 12 und/oder die Steuer- und/oder Auswerteeinheit 14 können auf einer Leiterplatte 26 vorgesehen sein (vgl. die Fig. 7 und 9).

Zur berührungslosen Erfassung der Position des zumindest teilweise magnetgelagerten Rotors 22 entlang mehrerer Messachsen Sᵢ kann die Sensorik 12 eine entsprechende Mehrzahl von Sensorspuleneinheiten aus jeweils zwei insbesondere als Luftspulen ausgeführten Sensorspulen 16, 18 umfassen (vgl. die Fig. 6 bis 9).

Fig. 6 zeigt eine einer Messachse Sᵢ zugeordnete beispielhafte Sensorspuleneinheit mit einer differenziellen Spulenanordnung, bei der die beiden jeweils mit dem periodischen elektrischen Erregungssignal Uₑₓₜ beaufschlagten Sensorspulen 16, 18 relativ zueinander sowie relativ zum benachbarten Magnetlager bzw. Rotor 22 so angeordnet sind, dass bei einer jeweiligen Rotorbewegung in Richtung der Messachse Sᵢ eine gegensinnige Induktivitätsänderung auftritt.

Für eine Erfassung der radialen Bewegung des Rotors 22 kann gemäß Fig. 7 beispielsweise jeder der beiden Messachsen x und y jeweils eine solche differenzielle Spulenanordnung aus zwei Sensorspulen 16ₓ, 18ₓ bzw. 16_{y}, 18_{y} zugeordnet sein. Die Induktivität der beiden Sensorspulen 16, 18 einer jeweiligen Sensorspuleneinheit ist somit jeweils von deren in Richtung der Messachse Sᵢ gemessenen Abstand vom Magnetlager bzw. Rotor 22 abhängig.

Fig. 8 zeigt eine einer Messachse Sᵢ zugeordnete beispielhafte Sensorspuleneinheit mit einer absoluten Spulenanordnung, bei der die beiden jeweils mit dem periodischen elektrischen Erregungssignal Uₑₓₜ beaufschlagten Sensorspulen 16, 18 relativ zueinander sowie relativ zum benachbarten Magnetlager bzw. Rotor 22 so angeordnet sind, dass sich die Induktivität nur in einer der beiden Sensorspulen 16, 18 ändert und in der anderen Sensorspule unverändert bleibt.

Für eine Erfassung der axialen Bewegung des Rotors 22 ist erfindungsgemäß und wie in Fig. 9 dargestellt, der Messachse z, die der Rotorachse entspricht, eine solche absolute Spulenanordnung aus zwei Sensorspulen 16_{z}, 18_{z} zugeordnet. Bei diesem in Fig. 9 dargestellten Ausführungsbeispiel umfasst diese absolute Sensorspulenanordnung beispielsweise zwei auf einer Leiterplatte 26 vorgesehene, sowohl relativ zueinander als auch relativ zur Messachse z bzw. Rotorachse konzentrische Sensorspulen 16_{z}, 18_{z} unterschiedlichen Durchmessers. Dabei dient die Sensorspule 16_{z} als Messspule und die Sensorspule 18_{z} als Referenzspule. Die Induktivität der Messspule 16_{z} ist im vorliegenden Fall von deren in Richtung der Messachse z bzw. in Richtung der Rotorachse gemessenen Abstand vom Magnetlager bzw. vom Rotor abhängig. Die Induktivität der Referenzspule 18_{z} bleibt konstant.

In beiden in den Fig. 6 und 7 bzw. 8 und 9 dargestellten Ausführungsbeispielen ergibt sich jeweils ein Differenzstrom i_{diff} aus den in den beiden einer jeweiligen Messachse Sᵢ zugeordneten Sensorspulen 16, 18 induzierten Strömen iᵢ, i₂ (vgl. auch die Fig. 11 und 12). Dabei kann die am Ausgang des Transformators 20 erzeugte induzierte Sensorspannung Uₛₑₙ zur Erfassung einer jeweiligen Rotorbewegung entlang der betreffenden Sensorachse Sᵢ wie in den Fig. 11 und 12 dargestellt beispielsweise pro Periode des Erregungssignals Uₑₓₜ jeweils zumindest zweimal abgetastet werden. Dabei ist das periodische elektrische Erregungssignal Uₑₓₜ im vorliegenden Fall beispielsweise durch eine sinus- oder kosinusförmige Spannung gebildet. Wie eingangs bereits erwähnt, ist grundsätzlich jedoch auch eine von einer Sinus- oder Kosinusform abweichende Form des periodischen elektrischen Erregungssignals denkbar.

Wie in den Fig. 11 und 12 dargestellt, kann die induzierte Sensorspannung Uₛₑₙ über die Steuer- und/oder Auswerteeinheit 14 pro Periode des Erregungssignals Uₑₓₜ beispielsweise jeweils zumindest zweimal bei einem jeweiligen Scheitel abgetastet werden. Es ist jedoch beispielsweise auch ein Abtasten bei einem jeweiligen Nulldurchgang denkbar.

Zudem wird im vorliegenden Fall über die Steuer- und/oder Auswerteeinheit 14 pro Periode des Erregungssignals Uₑₓₜ zur Bildung einer Differenzspannung U_{An}-U_{Bn} die Differenz zwischen zwei beispielsweise bei entgegengesetzten Scheitelwerten der induzierten Sensorspannung Uₛₑₙ erhaltenen Abtastwerten U_{An} und U_{Bn} erzeugt. Anhand der Amplitude der Differenzspannung kann der Betrag der Rotorbewegung entlang der betreffenden Messachse Sᵢ bestimmt werden. Alternativ oder zusätzlich kann anhand des Vorzeichens der Differenzspannung die Richtung der Rotorbewegung entlang der betreffenden Messachse Sᵢ bestimmt werden.

Fig. 11 zeigt beispielhafte Signalformen des elektrischen Erregungssignals Uₑₓₜ, der in den Sensorspulen 16, 18 induzierten Ströme i₁, i₂, des Differenzstroms i_{diff} und der induzierten Sensorspannung Uₛₑₙ bei einer positiven Abweichung der Rotorposition aus dem geometrischen Zentrum.

Auch Fig. 12 zeigt wieder beispielhafte Signalformen des elektrischen Erregungssignals Uₑₓₜ, der in den Sensorspulen 16, 18 induzierten Ströme i₁, i₂, des Differenzstroms i_{diff} und der abgetasteten induzierten Sensorspannung Uₛₑₙ, wobei im vorliegenden Fall jedoch eine negative Abweichung der Rotorposition aus dem geometrischen Zentrum vorliegt.

Die induzierte Sensorspannung Uₛₑₙ besitzt bei den dargestellten Ausführungsbeispielen eine ähnliche Signalform wie das elektrische Erregungssignal Uₑₓₜ, wobei jedoch die Amplitude der induzierten Sensorspannung Uₛₑₙ zur Positionsabweichung des Rotors entlang einer jeweiligen Messachse Sᵢ proportional ist. Mit unterschiedlicher Abweichungsrichtung ist die induzierte Sensorspannung Uₛₑₙ entweder mitphasig oder gegenphasig zum elektrischen Erregungssignal oder zur Erregungsspannung Uₑₓₜ. Aus der zweimaligen Abtastung der induzierten Sensorspannung Uₛₑₙ bei den Scheiteln U_{An}, U_{Bn} ergibt sich der Messausgang U_{Posn}=U_{An}-U_{Bn}, der die physikalische Position des Magnetlagers bzw. des Rotors abbildet.

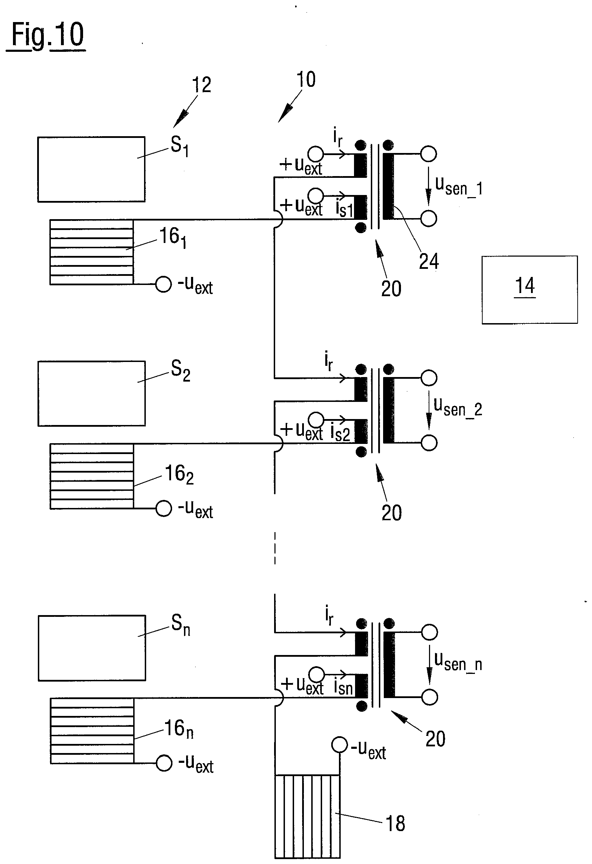

Fig. 10 zeigt eine beispielhafte erweitere absolute Spulenanordnung zur Erfassung der Rotorbewegung entlang mehrerer Messachsen Sᵢ, wobei die den verschiedenen Messachsen Sᵢ zugeordneten Spuleneinheiten jeweils eine als Messspule dienende Sensorspule 16ᵢ aufweisen und für die verschiedenen Spuleneinheiten eine gemeinsame Referenzspule 18 vorgesehen ist. Aus den verschiedenen Spuleneinheiten ergeben sich über die zugeordneten Transformatoren 20 in der zuvor beschriebenen Weise die entsprechenden induzierten Spannungen Uₛₑₙ.

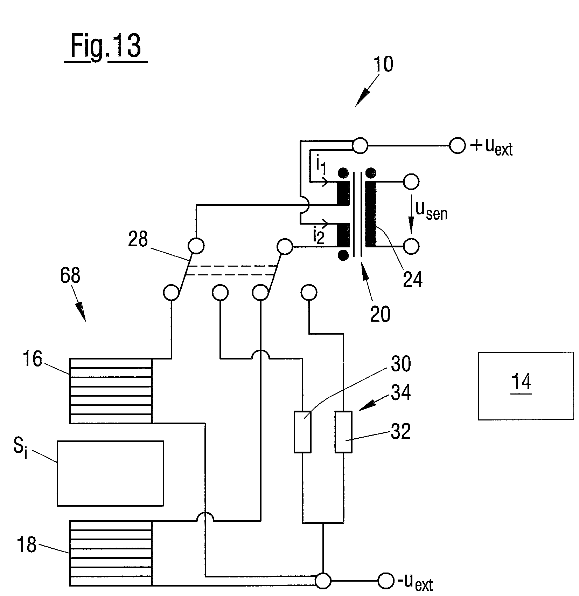

Fig. 13 zeigt eine beispielhafte Temperaturkompensations-Schaltung einer Positionserfassungsvorrichtung 10. Danach kann zwischen dem Transformator 20 und den beiden einer jeweiligen Messachse Sᵢ zugeordneten Sensorspulen 16, 18 ein über die Steuer- und/oder Auswerteeinheit 14 ansteuerbarer, insbesondere analoger Schalter 28 vorgesehen sein. Über diesen Schalter 28 kann der Transformator 20 während des Erfassungsbetriebs zur Bestimmung des jeweils aktuellen Verstärkungsfaktors des Transformators 20 wiederholt von den beiden Sensorspulen 16, 18 auf eine insbesondere zwei feste Widerstände 30, 32 umfassende Widerstandsanordnung 34 konstanter Impedanz umgeschaltet werden.

Über die Steuer- und/oder Auswerteeinheit 14 kann anhand eines Vergleichs des bestimmten jeweiligen aktuellen Verstärkungsfaktors des Transformators 20 mit einem insbesondere gespeicherten Referenzwert die jeweils aktuelle Variation des Verstärkungsfaktors des Transformators 20 festgestellt werden. Anhand der festgestellten Variation kann über die Steuer- und/oder Auswerteeinheit 14 schließlich die während des Erfassungsbetriebs als Ausgangsspannung erzeugte induzierte Sensorspannung Uₛₑₙ korrigiert werden, um insbesondere durch die Temperatur des Transformators 20 und Toleranzen des Systems bedingte Einflüsse auf die induzierte Sensorspannung Uₛₑₙ zu kompensieren. Als feste Widerstände 30, 32 der Widerstandsanordnung 34 können insbesondere Präzisionswiderstände vorgesehen sein.

Während die Temperaturkompensations-Schaltung im vorliegenden Fall beispielsweise in Verbindung mit einer Sensorspuleneinheit mit einer differenziellen Spulenanordnung vorgesehen ist, kann eine entsprechende Temperaturkompensations-Schaltung auch in Verbindung mit einer Sensorspuleneinheit mit einer absoluten Spulenanordnung vorgesehen sein. Im Übrigen kann die Positionserfassungsvorrichtung 10 zumindest im Wesentlichen wieder so ausgeführt sein, wie dies zuvor beschrieben wurde. So erfolgt auch im vorliegenden Fall anders als bei einer herkömmlichen elektrischen Verstärkung des Rohmesssignals eine elektromagnetische Verstärkung über einen Transformator 20, wodurch sich eine hohe Verstärkung und ein sehr niedriges Rauschniveau ergeben.

Bei der in der Fig. 13 dargestellten, der Kompensation von Toleranzen und Temperatureinflüssen des Systems dienenden Temperaturkompensations-Schaltung, kann der Schalter 28 über ein entsprechendes Steuersignal der Steuer- und/oder Auswerteeinheit 14 während der Messung zwischen den beiden Sensorspulen 16, 18 mit variierender Impedanz und den beiden festen Widerständen 30, 32 der Widerstandsanordnung 34 mit konstanter Impedanz umgeschaltet werden.

Beim Einschalten des Messsystems kann die Ausgangsspannung bei konstanter Impedanz als Referenz gespeichert werden. Während des Messbetriebs kann regelmäßig auf die konstante Impedanz umgeschaltet werden. Aus der aktuellen Ausgangsspannung bei konstanter Impedanz und der gespeicherten Referenz kann die aktuelle Variation des Verstärkungsfaktors festgestellt werden. Dadurch kann die Ausgangsspannung aus dem Sensorbetrieb nachgestellt bzw. korrigiert werden, so dass man ein von der Temperatur des Transformators unabhängiges Messergebnis erhält.

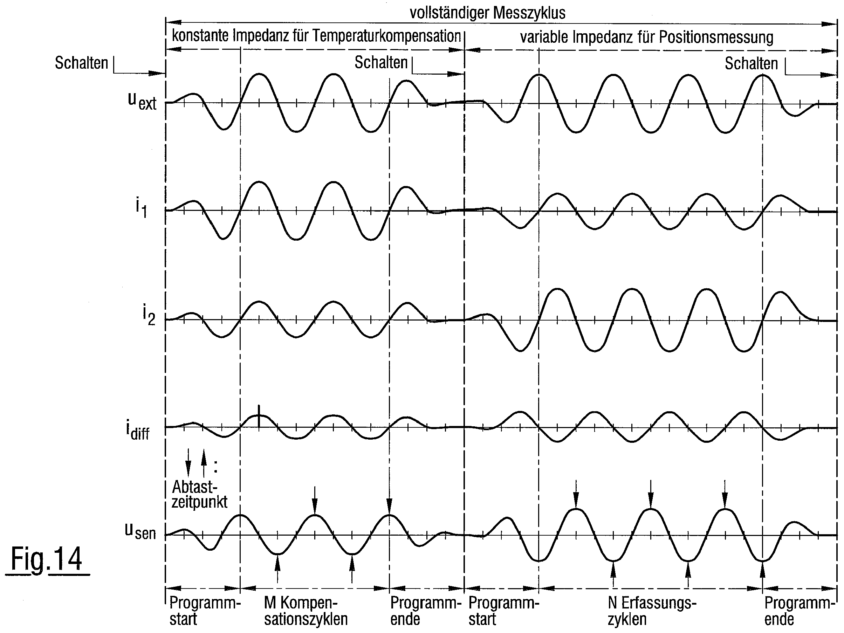

Fig. 14 zeigt einen beispielhaften, mehrere Kompensationszyklen und Erfassungszyklen umfassenden vollständigen Messzyklus. Dabei ergibt sich während der Kompensationszyklen zur Temperaturkompensation eine konstante Impedanz, wohingegen während den Erfassungszyklen eine variable Impedanz vorliegt. Wie anhand der Fig. 14 zu erkennen ist, kann beim Einschalten des Messsystems zunächst die Widerstandsanordnung 34 zugeschaltet werden. Während eines jeweiligen Messzyklus können dann abwechselnd Kompensationszyklen konstanter Impedanz und Erfassungszyklen variabler Impedanz initiiert werden. Die in den Fig. 11 und 12 dargestellten beispielhaften Signalformen sind auch in der Fig. 14 dargestellt. Durch die vertikalen Pfeile sind die jeweiligen Abtastzeitpunkte markiert.

Die im Zusammenhang mit den verschiedenen Ausführungsbeispielen genannten Sensorspulen können jeweils stationär im Bereich des jeweiligen Magnetlagers angeordnet sein. Bei einer jeweiligen differenziellen Spulenanordnung der in den Fig. 6 und 7 dargestellten Art können die beiden einer jeweiligen Messachse Sᵢ zugeordneten Sensorspulen 16, 18 insbesondere jeweils parallel zur Achse des benachbarten Magnetlagers bzw. parallel zur Rotorachse ausgerichtet sein. Bei einer jeweiligen erfinderischen absoluten Spulenanordnung der in den Fig. 8 und 9 dargestellten Art, sind die beiden der Messachse z zugeordneten Sensorspulen 16, 18 koaxial zum benachbarten Magnetlager bzw. koaxial zur Rotorachse angeordnet und weisen die beiden Sensorspulen unterschiedliche Durchmesser auf.

Eine jeweilige erfindungsgemäße Positionserfassungsvorrichtung 10 kann beispielsweise einer Vakuumpumpe der im Zusammenhang mit den Fig. 1 bis 5 beschriebenen Art und insbesondere deren Permanentmagnetlager zugeordnet sein.

### Bezugszeichenliste

- 10: Positionserfassungsvorrichtung
- 12: Sensorik
- 14: Steuer- und/oder Auswerteeinheit
- 16: Sensorspule
- 18: Sensorspule
- 20: Mittel zur Erzeugung einer induzierten Sensorspannung, Transformator
- 22: Rotor
- 24: Ausgangsspule
- 26: Leiterplatte
- 28: Schalter
- 30: Widerstand
- 32: Widerstand
- 34: Widerstandsanordnung

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung

- Sᵢ: Messachse
- Uₑₓₜ: periodisches elektrisches Erregungssignal, Erregungsspannung
- Uₛₑₙ: induzierte Sensorspannung
- i₁: induzierter Strom
- i₂: induzierter Strom
- i_{diff}: Differenzstrom

## Patentansprüche

1. Vorrichtung zur magnetischen Lagerung eines Rotors (22) mit einer Vorrichtung (10) zur Erfassung der Position des zumindest teilweise magnetgelagerten Rotors (22), insbesondere eines zumindest teilweise magnetgelagerten Rotors einer Vakuumpumpe, bevorzugt einer Turbomolekularvakuumpumpe,
mit einer im Bereich eines Magnetlagers (183) des Rotors (22) angeordneten berührungslosen Sensorik (12) und einer dieser zugeordneten Steuer- und/oder Auswerteeinheit (14), wobei die Sensorik (12) zur Erfassung einer Rotorbewegung entlang mindestens einer jeweiligen Messachse (Sᵢ) jeweils mindestens eine Sensorspuleneinheit mit wenigstens zwei Sensorspulen (16, 18) umfasst, die über die Steuer- und/oder Auswerteeinheit (14) jeweils mit einem periodischen elektrischen Erregungssignal (Uₑₓₜ) beaufschlagbar und relativ zueinander sowie relativ zum Magnetlager (183) so angeordnet sind, dass bei einer jeweiligen Rotorbewegung entlang der jeweiligen Messachse (Sᵢ) in den beiden Sensorspulen (16, 18) entweder eine gegensinnige Induktivitätsänderung auftritt oder sich die Induktivität nur in einer der beiden Sensorspulen (16, 18) ändert und in der anderen Sensorspule zumindest im Wesentlichen unverändert bleibt,
**dadurch gekennzeichnet, dass** eine jeweilige Sensorspuleneinheit zur Bildung einer absoluten Spulenanordnung, bei der sich bei einer jeweiligen axialen Rotorbewegung die Induktivität nur in einer der beiden Sensorspulen (16, 18) ändert und in der als Referenz dienenden anderen Sensorspule unverändert bleibt, mit relativ zueinander konzentrischen Sensorspulen (16, 18) unterschiedlicher Durchmesser ausgeführt ist.

2. Vorrichtung nach Anspruch 1,
**dadurch gekennzeichnet, dass** Mittel (20) zur Bildung einer induzierten Sensorspannung (Uₛₑₙ) aus einem Differenzstrom (i_{diff}) vorgesehen sind, der sich aus den in den beiden einer jeweiligen Messachse (Sᵢ) zugeordneten Sensorspulen (16, 18) induzierten Strömen (i₁, i₂) ergibt, wobei die induzierte Sensorspannung (Uₛₑₙ) über die Steuer- und/oder Auswerteeinheit (14) zur Erfassung einer jeweiligen Rotorbewegung entlang der betreffenden Sensorachse (Sᵢ) abtastbar ist, insbesondere jeweils pro Periode des Erregungssignals (Uₑₓₜ) zumindest zweimal.

3. Vorrichtung nach zumindest einem der vorstehenden Ansprüche,
**dadurch gekennzeichnet, dass** über die Steuer- und/oder Auswerteeinheit (14) pro Periode des Erregungssignals (Uₑₓₜ) zur Bildung einer Differenzspannung die Differenz zwischen zwei insbesondere bei entgegengesetzten Scheitelwerten der induzierten Sensorspannung (Uₛₑₙ) erhaltenen Abtastwerten erzeugbar und anhand der Amplitude der Differenzspannung der Betrag der Rotorbewegung entlang der betreffenden Messachse (Sᵢ) und/oder anhand des Vorzeichens der Differenzspannung die Richtung der Rotorbewegung entlang der betreffenden Messachse (Sᵢ) bestimmbar ist.

4. Vorrichtung nach zumindest einem der vorstehenden Ansprüche,
**dadurch gekennzeichnet, dass** das periodische elektrische Erregungssignal (Uₑₓₜ) durch ein zumindest im Wesentlichen sinus- oder cosinusförmiges Signal gebildet ist oder eine von einer Sinus- oder Cosinusform abweichende Form besitzt.

5. Vorrichtung nach zumindest einem der vorstehenden Ansprüche,
**dadurch gekennzeichnet, dass** die Mittel zur Bildung der induzierten Sensorspannung (Uₛₑₙ) einen eingangsseitig mit den beiden Sensorspulen (16, 18) verbundenen und ausgangsseitig eine Ausgangsspule (24) aufweisenden Transformator (20) umfassen.

6. Vorrichtung nach Anspruch 5,
**dadurch gekennzeichnet, dass** zwischen dem Transformator und den beiden einer jeweiligen Messachse (Sᵢ) zugeordneten Sensorspulen (16, 18) ein über die Steuer- und/oder Auswerteeinheit (14) ansteuerbarer, insbesondere analoger Schalter (28) vorgesehen ist, über den der Transformator (20) während des Erfassungsbetriebs zur Bestimmung des jeweils aktuellen Verstärkungsfaktors des Transformators (20) wiederholt von den beiden Sensorspulen (16, 18) auf eine, insbesondere zwei feste Widerstände (30, 32) umfassende, Widerstandsanordnung (34), bevorzugt mit konstanter Impedanz, umschaltbar ist.

7. Vorrichtung nach Anspruch 6,
**dadurch gekennzeichnet, dass** über die Steuer- und/oder Auswerteeinheit (14) anhand eines Vergleichs des bestimmten jeweiligen aktuellen Verstärkungsfaktors des Transformators (20) mit einem insbesondere gespeicherten Referenzwert die jeweils aktuelle Variation des Verstärkungsfaktors des Transformators (20) feststellbar ist.

8. Vorrichtung nach Anspruch 7,
**dadurch gekennzeichnet, dass** über die Steuer- und/oder Auswerteeinheit (14) anhand der festgestellten jeweils aktuellen Variation des Verstärkungsfaktors des Transformators (20) die während des Erfassungsbetriebs als Ausgangsspannung erzeugte induzierte Sensorspannung (Uₛₑₙ) korrigierbar ist, um, insbesondere durch die Temperatur des Transformators (20) bedingte, Einflüsse auf die induzierte Sensorspannung (Uₛₑₙ) zu kompensieren.

9. Vorrichtung nach zumindest einem der vorstehenden Ansprüche,
**dadurch gekennzeichnet, dass** die Sensorik (12), insbesondere eine jeweilige Sensorspuleneinheit (16, 18), und/oder die Steuer- und/oder Auswerteeinheit (14) auf einer Leiterplatte (26) vorgesehen sind.

10. Vorrichtung nach zumindest einem der vorstehenden Ansprüche,
**dadurch gekennzeichnet, dass** die Sensorik (12) zur berührungslosen Erfassung der Position des zumindest teilweise magnetgelagerten Rotors (22) entlang mehrerer Messachsen (Sᵢ) eine entsprechende Mehrzahl von Sensorspuleneinheiten mit jeweils zumindest zwei Sensorspulen (16, 18) umfasst.

11. Vorrichtung nach zumindest einem der vorstehenden Ansprüche,
**dadurch gekennzeichnet, dass** eine jeweilige Sensorspuleneinheit zur Bildung einer differenziellen Spulenanordnung, bei der in den beiden Sensorspulen (16, 18) bei einer jeweiligen radialen Rotorbewegung eine gegensinnige Induktivitätsänderung auftritt, zwei auf einander gegenüberliegenden Seiten des benachbarten Magnetlagers (183) angeordnete Sensorspulen (16, 18) umfasst.

12. Vakuumpumpe, insbesondere Turbomolekularpumpe, mit einem Stator und einem relativ zum Stator um die Rotorachse (18) drehbar gelagerten Rotor, und mit einer Vorrichtung nach zumindest einem der vorstehenden Ansprüche zur Erfassung der Position des Rotors.

13. Verfahren zum Erfassen der Position eines zumindest teilweise magnetgelagerten Rotors (22), insbesondere eines zumindest teilweise magnetgelagerten Rotors einer Vakuumpumpe, bevorzugt einer Turbomolekularvakuumpumpe, bei dem zum Erfassen einer Rotorbewegung entlang mindestens
einer jeweiligen Messachse (Sᵢ) wenigstens zwei Sensorspulen (16, 18) mindestens
einer jeweiligen Sensorspuleneinheit einer im Bereich eines Magnetlagers (183) des Rotors (22) angeordneten berührungslosen Sensorik (12) jeweils mit einem periodischen elektrischen Erregungssignal (Uₑₓₜ) beaufschlagt und relativ zueinander sowie relativ zum Magnetlager (183) so angeordnet werden, dass bei einer jeweiligen Rotorbewegung entlang der jeweiligen Messachse (Sᵢ) in den beiden Sensorspulen (16, 18) entweder eine gegensinnige Induktivitätsänderung auftritt oder sich die Induktivität nur in einer der beiden Sensorspulen (16, 18) ändert und in der anderen Sensorspule zumindest im Wesentlichen unverändert bleibt,
**dadurch gekennzeichnet, dass** bei dem eine jeweilige Sensorspuleneinheit zur Bildung einer absoluten Spulenanordnung, bei der sich bei einer jeweiligen axialen Rotorbewegung die Induktivität nur in einer der beiden Sensorspulen (16, 18) ändert und in der als Referenz dienenden anderen Sensorspule unverändert bleibt, mit relativ zueinander konzentrischen Sensorspulen (16, 18) unterschiedlicher Durchmesser ausgeführt wird.

14. Verfahren nach Anspruch 13,
**dadurch gekennzeichnet, dass** aus einem Differenzstrom (idiff), der sich aus den in den beiden einer jeweiligen Messachse (Si) zugeordneten Sensorspulen (16, 18) induzierten Strömen (i₁, i₂) ergibt, eine induzierte Sensorspannung (Uₛₑₙ) gebildet wird, wobei die induzierte Sensorspannung (Uₛₑₙ) zur Erfassung einer jeweiligen Rotorbewegung entlang der betreffenden Sensorachse (Sᵢ) abgetastet wird, insbesondere jeweils pro Periode des Erregungssignals (Uₑₓₜ) zumindest zweimal.

15. Verfahren nach Anspruch 13 oder 14,
**dadurch gekennzeichnet, dass** pro Periode des Erregungssignals (Uₑₓₜ) zur Bildung einer Differenzspannung die Differenz zwischen zwei insbesondere bei entgegengesetzten Scheitelwerten der induzierten Sensorspannung (Uₛₑₙ) erhaltenen Abtastwerten erzeugt und anhand der Amplitude der Differenzspannung der Betrag der Rotorbewegung entlang der betreffenden Messachse (Sᵢ) und/oder anhand des Vorzeichens der Differenzspannung die Richtung der Rotorbewegung entlang der betreffenden Messachse (Sᵢ) bestimmt wird.

## Claims

1. An apparatus for magnetically supporting a rotor (22) having an apparatus (10) for detecting the position of the at least partly magnetically supported rotor (22), in particular of an at least partly magnetically supported rotor of a vacuum pump, preferably of a turbomolecular vacuum pump,
having a contactless sensor system (12) arranged in the region of a magnetic bearing (183) of the rotor (22), and having a control and/or evaluation unit (14) associated with said sensor system (12), wherein, to detect a rotor movement along at least one respective measurement axis (Sᵢ), the sensor system (12) comprises a respective at least one sensor coil unit having at least two sensor coils (16, 18) which can each be acted on by a periodic electrical excitation signal (Uₑₓₜ) via the control and/or evaluation unit (14) and which are arranged relative to one another and relative to the magnetic bearing (183) such that, on a respective rotor movement along the respective measurement axis (Sᵢ), either an inductance change in an opposite sense occurs in the two sensor coils (16, 18) or the inductance only changes in one of the two sensor coils (16, 18) and remains at least substantially unchanged in the other sensor coil, **characterized in that**
a respective sensor coil unit is configured with sensor coils (16, 18) of different diameters which are concentric relative to one another to form an absolute coil arrangement in which, on a respective axial rotor movement, the inductance only changes in one of the two sensor coils (16, 18) and remains unchanged in the other sensor coil serving as a reference.

2. An apparatus in accordance with claim 1,
**characterized in that** means (20) for forming an induced sensor voltage (Uₛₑₙ) from a differential current (i_{diff}) are provided, said differential current (i_{diff}) resulting from the currents (i₁, i₂) induced in the two sensor coils (16, 18) associated with a respective measurement axis (Sᵢ), with the induced sensor voltage (Uₛₑₙ) being able to be sampled, in particular at least twice per respective period of the excitation signal (Uₑₓₜ), via the control and/or evaluation unit (14) to detect a respective rotor movement along the respective sensor axis (Sᵢ).

3. An apparatus in accordance with at least one of the preceding claims,
**characterized in that** the difference between two sample values, which are in particular obtained with opposed peak values of the induced sensor voltage (Uₛₑₙ), can be produced via the control and/or evaluation unit (14) per period of the excitation signal (Uₑₓₜ) to form a differential voltage; and **in that** the amount of the rotor movement along the respective measurement axis (Sᵢ) can be determined based on the amplitude of the differential voltage and/or the direction of the rotor movement along the respective measurement axis (Sᵢ) can be determined based on the sign of the differential voltage.

4. An apparatus in accordance with at least one of the preceding claims,
**characterized in that** the periodic electrical excitation signal (Uₑₓₜ) is formed by an at least substantially sinusoidal or cosinusoidal signal or has a shape differing from a sinusoidal or cosinusoidal shape.

5. An apparatus in accordance with at least one of the preceding claims,
**characterized in that** the means for forming the induced sensor voltage (Uₛₑₙ) comprise a transformer (20) connected to the two sensor coils (16, 18) at the input side and having an output coil (24) at the output side.

6. An apparatus in accordance with claim 5,
**characterized in that** a switch, in particular an analog switch (28), controllable via the control and/or evaluation unit (14) is provided between the transformer and the two sensor coils (16, 18) associated with a respective measurement axis (Sᵢ) and the transformer (20) is switchable via said switch (28) repeatedly by the two sensor coils (16, 18) to a resistor arrangement (34), in particular comprising two fixed resistors (30, 32) and preferably having a constant impedance, during the detection operation for determining the respective actual amplification factor of the transformer (20).

7. An apparatus in accordance with claim 6,
**characterized in that** the respective actual variation of the amplification factor of the transformer (20) can be determined via the control and/or evaluation unit (14) based on a comparison of the determined respective actual amplification factor of the transformer (20) with a reference value which is in particular stored.

8. An apparatus in accordance with claim 7,
**characterized in that** the induced sensor voltage (Uₛₑₙ) generated as an output voltage during the detection operation can be corrected via the control and/or evaluation unit (14) based on the determined respective actual variation of the amplification factor of the transformer (20) in order to compensate influences on the induced sensor voltage (Uₛₑₙ) which are in particular caused by the temperature of the transformer (20).

9. An apparatus in accordance with at least one of the preceding claims,
**characterized in that** the sensor system (12), in particular a respective sensor coil unit (16, 18), and/or the control and/or evaluation unit (14) is/are provided on a circuit board (26).

10. An apparatus in accordance with at least one of the preceding claims,
**characterized in that** the sensor system (12) comprises a corresponding plurality of sensor coil units, each having at least two sensor coils (16, 18), for a contactless detection of the position of the at least partly magnetically supported rotor (22) along a plurality of measurement axes (Sᵢ).

11. An apparatus in accordance with at least one of the preceding claims,
**characterized in that** a respective sensor coil unit comprises two sensor coils (16, 18) arranged at mutually oppositely disposed sides of the adjacent magnetic bearing (183) to form a differential coil arrangement in which an inductance change in an opposite sense occurs in the two sensor coils (16, 18) on a respective radial rotor movement.

12. A vacuum pump, in particular a turbomolecular pump, having a stator and a rotor rotatably supported about the rotor axis (18) relative to the stator, and having an apparatus in accordance with least one of the preceding claims for detecting the position of the rotor.

13. A method of detecting the position of an at least partly magnetically supported rotor (22), in particular of an at least partly magnetically supported rotor of a vacuum pump, preferably of a turbomolecular vacuum pump, in which, to detect a rotor movement along at least one respective measurement axis (Sᵢ), at least two sensor coils (16, 18) of at least one respective sensor coil unit of a contactless sensor system (12) arranged in the region of a magnetic bearing (183) of the rotor (22) are each acted on by a periodic electrical excitation signal (Uₑₓₜ) and are arranged relative to one another and relative to the magnetic bearing (183) such that, on a respective rotor movement along the respective measurement axis (Sᵢ), either an inductance change in an opposite sense occurs in the two sensor coils (16, 18) or the inductance only changes in one of the two sensor coils (16, 18) and remains at least substantially unchanged in the other sensor coil,
**characterized in that**
a respective sensor coil unit is configured with sensor coils (16, 18) of different diameters which are concentric relative to one another to form an absolute coil arrangement in which, on a respective axial rotor movement, the inductance only changes in one of the two sensor coils (16, 18) and remains unchanged in the other sensor coil serving as a reference.

14. A method in accordance with claim 13,
**characterized in that** an induced sensor voltage (Uₛₑₙ) is formed from a differential current (i_{diff}) which results from the currents (i₁, i₂) induced in the two sensor coils (16, 18) associated with a respective measurement axis (Sᵢ), with the induced sensor voltage (Uₛₑₙ) being sampled, in particular at least twice per respective period of the excitation signal (Uₑₓₜ), to detect a respective rotor movement along the respective sensor axis (Sᵢ).

15. A method in accordance with claim 13 or claim 14,
**characterized in that** the difference between two sample values, which are in particular obtained with opposed peak values of the induced sensor voltage (Uₛₑₙ), is produced per period of the excitation signal (Uₑₓₜ) to form a differential voltage; and **in that** the amount of the rotor movement along the respective measurement axis (Sᵢ) is determined based on the amplitude of the differential voltage and/or the direction of the rotor movement along the respective measurement axis (Sᵢ) is determined based on the sign of the differential voltage.

## Revendications

1. Dispositif pour le montage magnétique d'un rotor (22), comportant un dispositif (10) pour détecter la position du rotor (22) au moins partiellement monté magnétiquement, en particulier d'un rotor au moins partiellement monté magnétiquement d'une pompe à vide, de préférence d'une pompe à vide turbomoléculaire,
comportant un système de capteurs (12) sans contact disposé dans la zone d'un palier magnétique (183) du rotor (22) et une unité de commande et/ou d'évaluation (14) associée à celui-ci,
dans lequel
pour détecter un mouvement du rotor le long d'au moins un axe de mesure respectif (Sᵢ), le système de capteurs (12) comprend au moins une unité de bobines de capteur respective pourvue d'au moins deux bobines de capteur (16, 18) qui peuvent être sollicitées chacune par un signal d'excitation électrique périodique (Uₑₓₜ) par l'intermédiaire de l'unité de commande et/ou d'évaluation (14) et qui sont disposées l'une par rapport à l'autre et par rapport au palier magnétique (183) de telle sorte que lors d'un mouvement respectif du rotor le long de l'axe de mesure respectif (Sᵢ), soit un changement d'inductance en sens opposés apparaît dans les deux bobines de capteur (16, 18), soit l'inductance change seulement dans l'une des deux bobines de capteur (16, 18) et reste au moins sensiblement inchangée dans l'autre bobine de capteur,
**caractérisé en ce que**
pour former un agencement de bobines absolu, dans lequel, lors d'un mouvement axial respectif du rotor, l'inductance ne change que dans l'une des deux bobines de capteur (16, 18) et reste inchangée dans l'autre bobine de capteur servant de référence, une unité de bobines de capteur respective est conçue avec des bobines de capteur (16, 18) concentriques l'une par rapport à l'autre et de diamètres différents,

2. Dispositif selon la revendication 1,
**caractérisé en ce que**
il est prévu des moyens (20) pour former une tension de capteur induite (Uₛₑₙ) à partir d'un courant différentiel (i_{diff}) qui résulte des courants induits (i₁, i₂) dans les deux bobines de capteur (16, 18) associées à un axe de mesure respectif (Sᵢ), la tension de capteur induite (Uₛₑₙ) pouvant être échantillonnée via l'unité de commande et/ou d'évaluation (14) pour détecter un mouvement respectif du rotor le long de l'axe de capteur correspondant (Sᵢ), en particulier au moins deux fois par période du signal d'excitation (Uₑₓₜ).

3. Dispositif selon l'une au moins des revendications précédentes,
**caractérisé en ce que**
par l'intermédiaire de l'unité de commande et/ou d'évaluation (14), la différence entre deux valeurs échantillonnées obtenues en particulier à des valeurs crêtes opposées de la tension de capteur induite (Uₛₑₙ) peut être générée par période du signal d'excitation (Uₑₓₜ) pour former une tension différentielle, et la valeur du mouvement du rotor le long de l'axe de mesure correspondant (Sᵢ) peut être déterminée sur la base de l'amplitude de la tension différentielle, et/ou la direction du mouvement du rotor le long de l'axe de mesure correspondant (Sᵢ) peut être déterminée sur la base du signe de la tension différentielle.

4. Dispositif selon l'une au moins des revendications précédentes,
**caractérisé en ce que**
le signal d'excitation électrique périodique (Uₑₓₜ) est formé par un signal au moins sensiblement sinusoïdal ou cosinusoïdal ou présente une forme différente d'une forme sinusoïdale ou cosinusoïdale.

5. Dispositif selon l'une au moins des revendications précédentes,
**caractérisé en ce que**
les moyens pour former la tension de capteur induite (Uₛₑₙ) comprennent un transformateur (20) connecté du côté entrée aux deux bobines de capteur (16, 18) et comprenant du côté sortie une bobine de sortie (24).

6. Dispositif selon la revendication 5,
**caractérisé en ce que**
un commutateur en particulier analogique (28) pilotable via l'unité de commande et/ou d'évaluation (14) est prévu entre le transformateur et les deux bobines de capteur (16, 18) associées à un axe de mesure respectif (Sᵢ), ledit commutateur permettant de commuter le transformateur (20) à répétition par les deux bobines de capteur (16, 18) pour passer à un ensemble de résistance (34) comprenant en particulier deux résistances fixes (30, 32), de préférence d'impédance constante, pendant le fonctionnement de détection en vue de déterminer le facteur d'amplification actuel respectif du transformateur (20).

7. Dispositif selon la revendication 6,
**caractérisé en ce que**
la variation actuelle respective du facteur d'amplification du transformateur (20) peut être constatée via l'unité de commande et/ou d'évaluation (14) sur la base d'une comparaison du facteur d'amplification actuel respectif déterminé du transformateur à une valeur de référence en particulier mémorisée.

8. Dispositif selon la revendication 7,
**caractérisé en ce que**
la tension de capteur induite (Uₛₑₙ) générée à titre de tension de sortie pendant le fonctionnement de détection est corrigible via l'unité de commande et/ou d'évaluation (14) sur la base de la variation actuelle respective constatée du facteur d'amplification du transformateur (20), afin de compenser des influences sur la tension de capteur induite (Uₛₑₙ) causées en particulier par la température du transformateur (20).

9. Dispositif selon l'une au moins des revendications précédentes,
**caractérisé en ce que**
le système de capteurs (12), en particulier une unité de bobines de capteur respective (16, 18), et/ou l'unité de commande et/ou d'évaluation (14) sont prévus sur une carte à circuits (26).

10. Dispositif selon l'une au moins des revendications précédentes,
**caractérisé en ce que**
pour la détection sans contact de la position du rotor (22) monté au moins partiellement magnétiquement le long de plusieurs axes de mesure (Sᵢ), le système de capteurs (12) comprend une pluralité correspondante d'unités de bobines de capteur ayant respectivement au moins deux bobines de capteur (16, 18).

11. Dispositif selon l'une au moins des revendications précédentes,
**caractérisé en ce que**
pour former un agencement de bobines différentiel, dans lequel un changement d'inductance en sens opposés apparaît dans les deux bobines de capteur (16, 18) lors d'un mouvement radial respectif du rotor, une unité de bobines de capteur respective comprend deux bobines de capteur (16, 18) disposées sur les côtés opposés du palier magnétique adjacent (183).

12. Pompe à vide, en particulier pompe turbomoléculaire, comportant un stator et un rotor monté mobile en rotation autour de l'axe de rotor (18) par rapport au stator, et comportant un dispositif selon l'une des revendications précédentes pour la détection de la position du rotor.

13. Procédé pour la détection de la position d'au moins un rotor (22) au moins partiellement monté magnétiquement, en particulier d'un rotor au moins partiellement monté magnétiquement d'une pompe à vide, de préférence d'une pompe à vide turbomoléculaire,
dans lequel
pour détecter un mouvement du rotor le long d'au moins un axe de mesure respectif (Sᵢ), au moins deux bobines de capteur (16, 18) d'au moins une unité de bobines de capteur respective d'un système de capteurs (12) sans contact agencé dans la zone d'un palier magnétique (183) du rotor sont sollicitées chacune par un signal d'excitation électrique périodique (Uₑₓₜ) et sont disposées l'une par rapport à l'autre et par rapport au palier magnétique (183) de telle sorte que lors d'un mouvement respectif du rotor le long de l'axe de mesure respectif (Sᵢ), soit un changement d'inductance en sens opposés apparaît dans les deux bobines de capteur (16, 18), soit l'inductance change seulement dans l'une des deux bobines de capteur (16, 18) et reste au moins sensiblement inchangée dans l'autre bobine de capteur,
**caractérisé en ce que**
pour former un agencement de bobines absolu, dans lequel, lors d'un mouvement axial respectif du rotor, l'inductance ne change que dans l'une des deux bobines de capteur (16, 18) et reste inchangée dans l'autre bobine de capteur servant de référence, une unité de bobines de capteur respective est conçue avec des bobines de capteur (16, 18) concentriques l'une par rapport à l'autre et de diamètres différents.

14. Procédé selon la revendication 13,
**caractérisé en ce que**
une tension de capteur induite (Uₛₑₙ) est formée à partir d'un courant différentiel (i_{diff}) qui résulte des courants induits (i₁, i₂) dans les deux bobines de capteur (16, 18) associées à un axe de mesure respectif (Sᵢ), la tension de capteur induite (Uₛₑₙ) étant échantillonnée pour détecter un mouvement respectif du rotor le long de l'axe de capteur correspondant (Sᵢ), en particulier au moins deux fois par période du signal d'excitation (Uₑₓₜ).

15. Procédé selon la revendication 13 ou 14,
**caractérisé en ce que**
la différence entre deux valeurs échantillonnées obtenues en particulier à des valeurs crêtes opposées de la tension de capteur induite (Uₛₑₙ) est générée par période du signal d'excitation (Uₑₓₜ) pour former une tension différentielle, et la valeur du mouvement du rotor le long de l'axe de mesure correspondant (Sᵢ) est déterminée sur la base de l'amplitude de la tension différentielle, et/ou la direction du mouvement du rotor le long de l'axe de mesure correspondant (Sᵢ) est déterminée sur la base du signe de la tension différentielle.
